# EUROPEAN PATENT APPLICATION

(11) **EP 4 742 106 A1**
(43) Date of publication of application: **13.05.2026**
(21) Application number: 24905648.2
(22) Date of filing: 03.09.2024
(51) Int. Cl.: G06N 5/04, G10L 15/22

(54) **QUESTION-ANSWER METHOD AND RELATED APPARATUS**

(30) Priority: 20.12.2023 CN 202311764553
(71) Applicant: Huawei Technologies Co., Ltd., Shenzhen, Guangdong 518129 (CN)
(72) Inventor: CHEN, Qimeng, Shenzhen, Guangdong 518129 (CN); SONG, Kaikai, Shenzhen, Guangdong 518129 (CN); DONG, Qinghao, Shenzhen, Guangdong 518129 (CN); TAN, Binlin, Shenzhen, Guangdong 518129 (CN); XIA, Jie, Shenzhen, Guangdong 518129 (CN)
(74) Representative: Goddar, Heinz J.
(86) International application number: PCT/CN2024/116567
(87) International publication number: WO 2025/130156

(57) **Abstract**

A question-answering method is provided, applied to a terminal device. A large language model is deployed on the terminal device. The method includes: The large language model generates answer content according to a first user instruction, and the terminal device broadcasts the answer content; during broadcasting of the answer content, when a second user instruction is detected, the broadcasting is interrupted and a processing instruction is sent to the large language model, where the large language model instructs, according to the processing instruction, to interrupt generation of the answer content, or continue the generation of the answer content to cache continuously generated content; the broadcasting of the answer content is interrupted in response to a broadcast interruption request; and unbroadcast content is broadcast when a third user instruction that instructs to continue broadcasting is detected, where the unbroadcast content is obtained by the large language model through generation based on the first user instruction and broadcasted content, or is obtained by reading the cached continuously generated content. In this application, based on a feature of generating-while-broadcasting of the large language model, a generation process of the large language model is controlled, so that the answer content can be continuously broadcast after being interrupted.

## Description

This application claims priority to Chinese Patent Application No. 202311764553X, filed with the China National Intellectual Property Administration on December 20, 2023 and entitled "QUESTION-ANSWERING METHOD AND RELATED APPARATUS", which is incorporated herein by reference in its entirety.

### TECHNICAL FIELD

This application relates to the field of artificial intelligence technologies, and in particular, to a question-answering method and a related apparatus.

### BACKGROUND

With development of artificial intelligence technologies, question-answering technologies become increasingly mature. In an existing question-answering method, broadcasting of current answer content may be interrupted according to a user instruction, to start a new dialog. However, when a user wants to continue broadcasting the interrupted answer content, because only adjacent dialogs are associated in the existing question-answering method, a related instruction of the user for continuing the broadcasting cannot be recognized. In other words, the user needs to ask a question again, and broadcast content is regenerated for broadcasting, and continuous broadcasting cannot be performed at an interruption position, resulting in poor user experience.

### SUMMARY

To resolve the foregoing problem, embodiments of this application provide a question-answering method and a related apparatus. Corresponding processing is performed after broadcasting is interrupted, so that answer content can be continuously broadcast after being interrupted.

Therefore, the following technical solutions are used in embodiments of this application.

According to a first aspect, an embodiment of this application provides a question-answering method. The method is applied to a terminal device, and a large language model is deployed on the terminal device. The method mainly includes: The large language model generates answer content according to a first user instruction, and the terminal device broadcasts the answer content; during broadcasting of the answer content, the terminal device detects a second user instruction, generates a broadcast interruption request, and sends a processing instruction to the large language model, where the large language model instructs, according to the processing instruction, to interrupt generation of the answer content, or continues the generation of the answer content according to the processing instruction, and the terminal device or the cloud device caches continuously generated content; the terminal device interrupts the broadcasting of the answer content after receiving the broadcast interruption request; and a third user instruction is detected, where the third user instruction instructs to continue broadcasting the answer content, the terminal device broadcasts unbroadcast content in the answer content, and the unbroadcast content is obtained by the large language model through generation based on the first user instruction and broadcasted content, or the unbroadcast content is obtained by reading the cached continuously generated content.

In other words, based on a feature of generating-while-broadcasting of the large language model in generating the answer content. This embodiment of this application provides the question-answering method, so that the answer content can be continuously broadcast after being interrupted. From a perspective of a user, the user sends the first user instruction to obtain the answer content for broadcasting. During broadcasting of the answer content, the user sends the second user instruction, and needs to interrupt the broadcasting of the answer content to execute the second user instruction or another instruction. After several user instructions including the second user instruction are executed, the user may send the third user instruction, and continue broadcasting the unbroadcast part after the answer content is interrupted.

In this embodiment of this application, to implement continuous broadcasting, after the second user instruction is received, the broadcast interruption request and the processing instruction are generated. First, the broadcast interruption request may control broadcasting of current answer content to be interrupted, to respond to another instruction of the user. Second, the processing instruction may control interruption of the generation of the answer content while interrupting the broadcast, and record the first user instruction and the broadcasted content, so that when the user instruction for continuing broadcasting appears, the unbroadcast content is determined based on the recorded first user instruction and the broadcasted content; or the generation of the answer content is not interrupted, that is, the generation of the answer content continues, and the unbroadcast content is recorded from an interruption position, so that the unbroadcast content can be directly obtained when the user instruction for continuing broadcasting appears. In this way, the continuous broadcasting of the answer content is implemented in this embodiment of this application. Therefore, based on the method in this embodiment of this application, the user may interrupt the broadcast of the answer content during the broadcasting of the answer content, to execute another instruction of the user. After the another instruction is executed, the user may continue broadcasting the answer content from the position at which the broadcast is interrupted. In this application, based on the feature of generating-while-broadcasting of the large language model, a generation process of the large language model is controlled, so that the answer content can be continuously broadcast after being interrupted.

In a possible implementation, the first user instruction and/or the broadcasted content is cached when the large language model interrupts the generation of the answer content. When the third user instruction is detected, the cached first user instruction and/or the broadcasted content are obtained, and the unbroadcast content may be obtained by using the large language model.

In this implementation, a method for determining the unbroadcast content based on the first user instruction and the broadcasted content is provided. For example, the first user instruction and the broadcasted content of the answer content are used as inputs of the large language model, to output the unbroadcast content of the answer content. Alternatively, the first user instruction is used as an input of a voice model, to output all of the answer content, and then the unbroadcast content is determined from the all content based on the broadcasted content of the answer content. That is, when the broadcasting of the answer content is interrupted, only the first user instruction and the broadcasted content of the answer content are cached. If there is a user instruction for continuing broadcasting, the voice model generates the unbroadcast content based on the cached first user instruction and the broadcasted content of the answer content. If there is no user instruction for continuing broadcasting, the voice model is not required to generate the answer content. Therefore, in the implementation method, the large language model is invoked only when there is the user instruction for continuing broadcasting, so that fewer logical resources are occupied and efficiency is high.

In another possible implementation, when the large language model interrupts the generation of the answer content, a context of the first user instruction is further cached. When the third user instruction is detected, the cached first user instruction, the context of the first user instruction, and the broadcasted content are obtained, and the unbroadcast content may be obtained by using the large language model.

In this implementation, the context of the first user instruction further needs to be recorded, to implement more accurate broadcast resumption. For example, the context may be a dialog turn in which the interruption occurs, whether a vehicle of the user is parked, a historical question of the user, a user profile, or the like. For example, after the user interrupts the broadcast, the user performs a plurality of dialogs. In this case, the context may have changed, for example, a historical question of the user changes or a user profile is updated. Therefore, during continuous broadcasting, broadcast content following a breakpoint may be generated based on the broadcasted content and the recorded context of the first user instruction, so that continuously broadcast content is more consistent with a scenario before the interruption, and is not interfered by the context change.

In another possible implementation, when the second user instruction is detected, the broadcast interruption request is generated and the processing instruction is sent to the large language model only when the user intention corresponding to the second user instruction meets the preset condition.

In this implementation, streaming broadcasting of the language model can be interrupted only when the user has an explicit intention, thereby achieving controllable streaming broadcasting interruption.

In another possible implementation, an implementation of determining that the user intention corresponding to the second user instruction meets the preset condition is a preset trustlist. In other words, it is determined that the second user instruction may interrupt the broadcasting of the current answer content by determining that the user intention corresponding to the second user instruction is an intention in the preset trustlist. That is, the broadcast interruption request is generated and the processing instruction is sent to the large language model.

In this implementation, a method for determining that the user has an explicit intention is not limited in this embodiment of this application. For example, a trustlist management method may be used. A user intention in the preset trustlist is an explicit intention, and a user intention not in the preset trustlist is a non-explicit intention. When an intention in the trustlist appears, in response to the user intention, the language model may perform actions such as interrupting the streaming broadcasting and starting a new dialog turn.

In another possible implementation, one purpose of a natural language understanding model is to perform analysis on a user intention. Therefore, the user intention corresponding to the second user instruction may be determined by using the natural language understanding model.

In this implementation, an intention recognition function of the natural language understanding model is used to perform understanding and analysis according to the user instruction, to determine the user intention corresponding to the user instruction.

In another possible implementation, a form of content input by the user is not limited in this embodiment of this application. When the form of the content input by the user is audio, voice analysis is performed on the audio input by the user, to obtain the corresponding first user instruction and/or the second user instruction and/or the third user instruction. When the form of the content input by the user is a text, the text input by the user is processed according to a preset processing rule, to obtain the first user instruction and/or the second user instruction and/or the third user instruction.

In another possible implementation, the form of the content input by the user is not limited in this embodiment of this application. That is, the content input by the user may be a voice or a text. When the user input is the audio, voice analysis processing may be performed on the content input by the user, to obtain the user instruction in this embodiment of this application. When the user input is the text, the content input by the user may be processed according to the preset processing rule, to obtain the user instruction in this embodiment of this application. The preset processing rule includes a rule such as generating a prompt text based on a text input by the user.

According to a second aspect, this application provides a question-answering method, applied to a question-answering system. The question-answering system includes a terminal device and a cloud device, the terminal device is communicatively connected to the cloud device, a large language model is deployed on the cloud device, and the terminal device detects a user instruction and broadcasts answer content. The question-answering method includes: The terminal detects a first user instruction, and sends the first user instruction to the cloud device; the cloud device generates answer content by using the large language model after receiving the first user instruction; the terminal device receives and broadcasts the answer content, and during broadcasting of the answer content, the terminal device detects a second user instruction, and sends the second user instruction to the cloud device; after receiving the second user instruction, the cloud device generates a broadcast interruption request, sends the broadcast interruption request to the terminal device, and sends a processing instruction to the large language model, where the processing instruction instructs the large language model to interrupt generation of the answer content, or the processing instruction instructs the large language model to continue the generation of the answer content, so that continuously generated content is cached; after receiving the broadcast interruption request, the terminal device interrupts the broadcasting of the answer content; the terminal device detects a third user instruction, and sends the third user instruction to the cloud device, where the third user instruction instructs to continue broadcasting the answer content; the cloud device receives the third user instruction, determines unbroadcast content in the answer content that is generated by the large language model based on the first user instruction and broadcasted content, and sends the unbroadcast content to the terminal device; or the cloud device or the terminal device obtains the unbroadcast content in the answer content by reading the cached continuously generated content; and the terminal device broadcasts the obtained unbroadcast content.

In a possible implementation, the method further includes: When the large language model interrupts the generation of the answer content, the cloud device or the terminal device caches the first user instruction and/or the broadcasted content. Therefore, the large language model may obtain the unbroadcast content through generation based on the cached first user instruction and the broadcasted content.

In a possible implementation, the method further includes: When the large language model interrupts the generation of the answer content, the cloud device or the terminal device caches a context of the first user instruction. Therefore, the large language model may obtain the unbroadcast content through generation based on the cached first user instruction, the context of the first user instruction, and the broadcasted content. This avoids an impact of a context change on generation of the unbroadcast content.

In another possible implementation, the cloud device receives the second user instruction, and generates the broadcast interruption request after determining that the user intention corresponding to the second user instruction meets the preset condition. That is, the broadcasting of the current answer content is interrupted only when the user intention corresponding to the second user instruction meets the preset condition.

In another possible implementation, a preset trustlist is set to limit a user intention that can interrupt the broadcasting of the answer content. That is, the broadcasting of the answer content is interrupted only the user intention corresponding to the second user instruction is an intention in the preset trustlist.

In another possible implementation, the user intention corresponding to the second user instruction is determined by using a natural language understanding model.

In another possible implementation, an application scenario of the method is not limited, and the method may be applied to a question-answering scenario of audio and text. The first user instruction and/or the second user instruction and/or the third user instruction may be obtained by performing voice analysis on audio input by the user, or may be obtained by performing processing according to a preset processing rule on a text input by the user.

According to a third aspect, this application provides a question-answering method, applied to a cloud device. A large language model is deployed on the cloud device. The question-answering method includes: generating, in response to a first user instruction of a user, corresponding answer content by using the large language model, where the generated answer content may be broadcast to the user; during broadcasting of the answer content, when a second user instruction is received, generating a broadcast interruption request to indicate interruption of the broadcast of the answer content, and further sending a processing instruction to the large language model, so that the large language model interrupts or continues generation of the answer content, where when the large language model continues the generation of the answer content, continuously generated content is cached, and the broadcast interruption request is configured to interrupt the broadcasting of the answer content; and receiving a third user instruction, and when a user intention indicated by the third user instruction is to continue broadcasting the answer content, determining unbroadcast content in the answer content that is generated by the large language model based on the first user instruction and broadcasted content, or obtaining the unbroadcast content by reading the cached continuously generated content, so that the unbroadcast content is broadcast. Therefore, a purpose of interrupting and continuing a broadcast process of the answer content is achieved.

In another possible implementation, the method further includes: when the large language model interrupts the generation of the answer content, caching the first user instruction and/or the broadcasted content. Therefore, the large language model may obtain the unbroadcast content through generation based on the cached first user instruction and the broadcasted content.

In another possible implementation, the method further includes: when the large language model interrupts the generation of the answer content, caching a context of the first user instruction. Therefore, the large language model may obtain the unbroadcast content through generation based on the first user instruction, the context of the first user instruction, and the broadcasted content.

In another possible implementation, a user instruction for interrupting broadcasting is limited. Further, a user intention corresponding to the second user instruction is determined, and the broadcast interruption request is generated only after the user intention meets a preset condition.

In another possible implementation, the preset condition is implemented by a preset trustlist, to determine the user intention corresponding to the second user instruction. When the user intention is an intention in the preset trustlist, the broadcast of the answer content is interrupted.

In another possible implementation, the user intention corresponding to the second user instruction is obtained through analysis by using a natural language understanding model.

In another possible implementation, when a form of content input by the user is audio, voice analysis is performed on the audio input by the user, to obtain the corresponding first user instruction and/or second user instruction and/or third user instruction. When the form of the content input by the user is a text, text processing is performed according to a preset processing rule to obtain the corresponding first user instruction and/or second user instruction and/or third user instruction.

According to a fourth aspect, this application provides a question-answering method, applied to a terminal device. The question-answering method includes: The terminal device detects a first user instruction, and sends the first user instruction to a cloud device, where the first user instruction instructs the cloud device to generate answer content based on a large language model; the terminal device receives and broadcasts the answer content sent by the cloud device, and during broadcasting of the answer content, the terminal device detects a second user instruction that instructs the cloud device to generate a broadcast interruption request, and sends the second user instruction to the cloud device; then the terminal device receives the broadcast interruption request sent by the cloud device, and interrupts the broadcasting of the answer content; the terminal device detects a third user instruction, and sends the third user instruction to the cloud device, where the third user instruction instructs to continue broadcasting unbroadcast content in the answer content; and finally, the terminal device receives the unbroadcast content in the answer content sent by the cloud device, and broadcasts the unbroadcast content.

In another possible implementation, when a form of content input by a user is audio, voice analysis is performed on the audio input by the user, to obtain the corresponding first user instruction and/or second user instruction and/or third user instruction. When the form of the content input by the user is a text, text processing is performed according to a preset processing rule to obtain the corresponding first user instruction and/or second user instruction and/or third user instruction.

According to a fifth aspect, this application provides a terminal device. A large language model is deployed on the terminal device, and the terminal device is configured to perform the method according to any one of the implementations in the first aspect. Alternatively, the terminal device is configured to perform the method according to any one of the implementations in the fourth aspect.

According to a sixth aspect, this application provides a question-answering system. The question-answering system includes a terminal device and a cloud device, the terminal device is communicatively connected to the cloud device, and a large language model is deployed on the cloud device. The terminal device is configured to perform the method according to any one of the fourth aspect, and/or the cloud device is configured to perform the method according to any one of the third aspect, and/or the question-answering system is configured to perform the method according to any one of the implementations in the second aspect.

According to a seventh aspect, this application provides a cloud device. A large language model is deployed on the cloud device, the cloud device is communicatively connected to a terminal device, and the cloud device is configured to perform the method according to any one of the implementations in the third aspect.

According to an eighth aspect, this application provides a computer-readable storage medium, and the computer-readable storage medium stores a computer program. When the computer program is executed by a processor, the method according to any one of the implementations is implemented.

According to a ninth aspect, this application provides a chip. The chip includes a processing circuit and a storage medium. The storage medium stores computer program code, and when the computer program code is executed by the processing circuit, the method according to any one of the implementations is implemented.

According to a tenth aspect, this application provides a computer program product, including program instructions. When the program instructions are executed by a computer, the computer is enabled to perform the method according to any one of the implementations is implemented.

### BRIEF DESCRIPTION OF DRAWINGS

The following briefly describes the accompanying drawings used in describing embodiments or technical descriptions.
FIG. 1 is a diagram of a scenario of an existing question-answering method;
FIG. 2 is a diagram of a scenario of a question-answering method according to an embodiment of this application;
FIG. 3 is a diagram of an example scenario of a user and a terminal device in a question-answering method according to an embodiment of this application;
FIG. 4 is a schematic flowchart of a question-answering method according to an embodiment of this application;
FIG. 5 is a schematic flowchart of a first example of a question-answering method according to an embodiment of this application;
FIG. 6a is a diagram of a question-answering system according to an embodiment of this application;
FIG. 6b is a diagram of another question-answering system according to an embodiment of this application;
FIG. 7A to FIG. 7C are a schematic flowchart of a method of a first example of a question-answering system according to an embodiment of this application;
FIG. 8 is a schematic flowchart of a second example of a question-answering method according to an embodiment of this application;
FIG. 9A to FIG. 9C are a schematic flowchart of a method of a second example of a question-answering system according to an embodiment of this application; and
FIG. 10A and FIG. 10B are a schematic flowchart of another question-answering method according to an embodiment of this application.

### DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, the word such as "example" or "for example" is used to give an example, an illustration, or a description. Any embodiment or design scheme described as an "example" or "for example" in embodiments of this application should not be explained as being more preferred or having more advantages than another embodiment or design scheme. To be precise, use of the word like "example" or "for example" is intended to present a relative concept in a specific manner.

In the descriptions of embodiments of this application, unless otherwise specified, "a plurality of' means two or more. For example, a plurality of processing units mean two or more processing units, and a plurality of elements mean two or more elements.

For ease of understanding the solutions provided in embodiments of this application, some terms used in the solutions are first briefly described.

Single-turn recording: After one recording is finished, a system needs to complete all operations: voice-to-text, text-to-intention, and intention-to-broadcast, and then exit a dialog. If a user wants to continue using the voice dialog, the user needs to wake up the system again.

Multi-turn recording: After recording is finished and all operations: voice-to-text, text-to-intention, and intention-to-broadcast are completed, a user can directly speak a next turn of dialog without waking up a system, but cannot interrupt a previous turn of dialog.

Full-duplex recording: A previous turn of operations: voice-to-text, text-to-intention, and intention-to-broadcast is being processed while a next turn of voice is being recorded. A previous dialog can be interrupted at any time.

A large language model (Large Language Model, LLM) is usually a neural network model including ultra-large parameters (usually more than one billion parameters), and includes the following features: First, massive parameters are included. The large language model includes tens of billions of parameters, and a model size may reach hundreds of GB or even more. This massive model size provides the model with strong expressive and learning capabilities. Second, multi-task learning can be performed. The large language model usually learns a plurality of different NLP (Neuro-Linguistic Programming, neural linguistic programming) tasks together, such as machine translation, text summary, and a question-answering system. Multitask learning allows the model to learn more extensive and general language understanding. Third, powerful compute resources are needed. Training the large language model usually takes hundreds or even thousands of GPUs (graphics processing units, graphics processing units) for a large amount of time, usually weeks to months. The powerful compute resources can accelerate the training process while retaining a capability of the large language model. Fourth, rich data is needed. The large language model requires a large amount of data for training. Only the large amount of data can make full use of an advantage of the parameter size of the large language model. Further, the large language model is widely used in the field of natural language processing, and is completely changing a state of an NLP task, and a more powerful and intelligent language technology is generated. The large language model is one of important development directions of AI (artificial intelligence, artificial intelligence). In addition, the large language model also demonstrate an excellent capability in various natural language processing tasks, such as text classification, sentiment analysis, abstract generation, and translation. The large language model may be used in a plurality of application fields such as automatic writing, chatbot, virtual assistant, voice assistant, and automatic translation.

With development of artificial intelligence technologies, question-answering technologies become increasingly mature. A large language model is used as an example. A dialog between the user and the large voice model may not be a simple question-answering dialog, but may be an analysis-interpretation dialog, for example, situation analysis, news analysis, and topic writing. Because the analysis-interpretation dialog is usually long, the user often interrupts a current broadcast to discuss another issue, and continues the previously interrupted broadcast after the discussion is finished. Generally, an interactive dialog manner is implemented in the development from single-turn recording to multi-turn recording and then to full-duplex recording. Especially with the advent of the large language model, interruption and continuation of broadcast often occur.

In an existing question-answering method, a current broadcast may be interrupted according to a user instruction to start a new issue discussion. However, when the user wants to continue the interrupted broadcast content, because only adjacent dialogs are associated, a related instruction of the user for continuing broadcasting cannot be recognized. That is, the user needs to ask a question again and a broadcast content is regenerated for broadcasting, and continuous broadcasting cannot be performed at an interruption position, resulting in poor user experience.

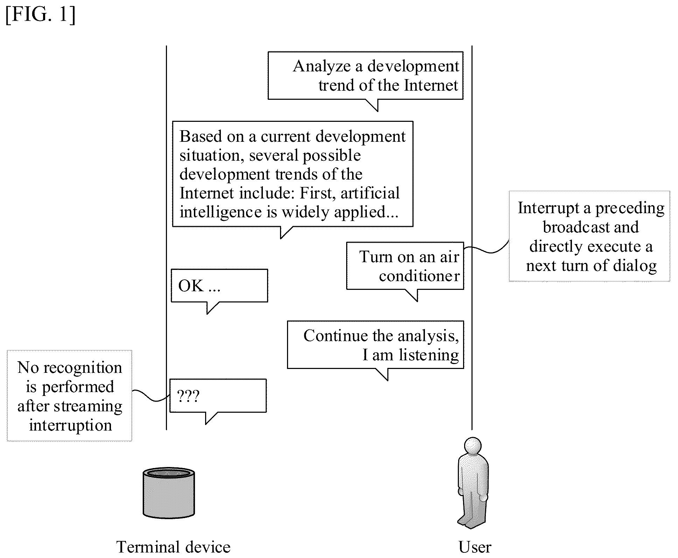

FIG. 1 is a diagram of a scenario of an existing question-answering method. As shown in FIG. 1, in the scenario of the existing question-answering method, a user sends an instruction "Analyze a development trend of the Internet". According to the instruction, a terminal device broadcasts "Based on a current development situation, several possible development trends of the Internet include: First, artificial intelligence is widely applied". During broadcasting, the user sends an instruction "Turn on an air conditioner". The terminal device interrupts broadcasting, and broadcasts a corresponding text "OK" according to the instruction "Turn on the air conditioner". The user sends an instruction "Continue the analysis, I am listening", intending to continue the broadcast on "Analyze the Internet trend". However, the terminal device does not associate non-adjacent dialog turns, and cannot recognize the current instruction to continue the interrupted broadcast.

There is a solution. In an original dialog flow, node configuration information like "exit this node and be automatically pulled back" is configured, so that when a new dialog flow following the broadcast interruption ends, the original dialog flow is pulled back and broadcast.

In this solution, for a pre configuration of "whether to pull back the original dialog flow", the dialog can only be pulled back rigidly, regardless of user intention. In other words, when the user and a machine have a dialog, automatically pulling back some dialogs may contradict the user intention, reducing user experience.

Another solution is to associate a first parameter of a first dialog between the user and an automated attendant with a third-party application. A system may obtain the first parameter, and resume the first human-machine dialog between the user and the automated attendant based on the first parameter. That is, if the user wants to continue the previously paused topic, a dropped dialog context may be reconstructed by using the first parameter, without forcing the user to restart a conversation.

In this solution, the dropped dialog context may be reconstructed by using the first parameter, and the previously paused topic may be continued. In a scenario in which broadcasting is interrupted, through this solution, a dropped dialog context may be reconstructed by using a recorded first parameter, and an interruption position at which the broadcast is interrupted is found, but subsequent to-be-broadcast content cannot be learned, and therefore continuous broadcasting cannot be performed.

To resolve an existing technical problem, an embodiment of this application provides yet another solution. When a user intends to interrupt broadcast content, instruction information of the user and broadcasted content are recorded, or the broadcast is interrupted while content generation continues, to obtain unbroadcast content following the interruption position. When the user resumes the broadcast content, the broadcast content is regenerated based on the recorded instruction information of the user and the broadcasted content, and then broadcast content following the interruption position is obtained based on the broadcasted content, to perform continuous broadcasting, or generated unbroadcast content is obtained to perform continuous broadcasting.

To make a person skilled in the art understand the technical solutions in this application better, the following clearly and completely describes the technical solutions in embodiments of this application with reference to the accompanying drawings. In embodiments of this application, to briefly describe specific implementations of embodiments of this application, embodiments of this application are described by using voice interaction as an example. It should be further noted that a method or a related apparatus in embodiments of this application may alternatively be used in any other form of dialog content, for example, a text dialog in which a user interrupts text display to execute another instruction, and continues the text display from an interruption position when a user instruction for continuing display appears.

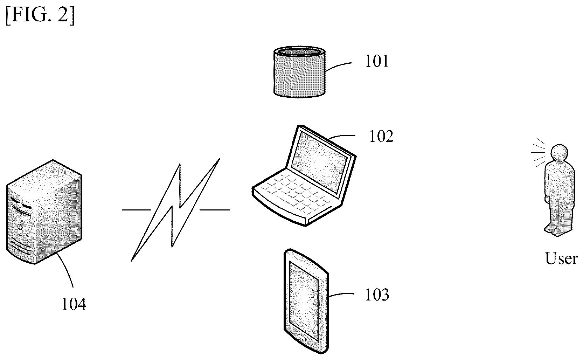

FIG. 2 is a diagram of a scenario of a question-answering method. As shown in FIG. 2, a user may receive or send a message through a transceiver module. A processing module process a user instruction, and send a processing result to the transceiver module, to interact with the user.

Optionally, the voice transceiver module and the voice processing module may be integrated and deployed on a terminal device, or only the transceiver module is deployed on the terminal device to pick up and play a voice, and the voice processing module is deployed on a server.

As shown in FIG. 2, the terminal device may be a terminal device 101, a terminal device 102, or a terminal device 103 shown in FIG. 2, and the server may be a server 104 shown in FIG. 2. As shown in FIG. 2, when the voice processing module is deployed on the server, the terminal device 101, the terminal device 102, the terminal device 103, and the server 104 are communicatively connected via a communication link. The communication link may include various connection types, for example, a wired communication link, a wireless communication link, or an optical fiber cable.

Optionally, various communication client applications, such as a web browser application, a shopping application, a search application, an instant messaging tool, an email client, and social platform software, may be installed in the terminal device 101, the terminal device 102, and the terminal device 103. The terminal device 101, the terminal device 102, and the terminal device 103 may be various electronic devices that have a display and support web page browsing, including but not limited to a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), and the like. This is not limited in this embodiment of this application. The server 104 may be a server that provides various services, for example, a background server that supports pages displayed on the terminal device 101, the terminal device 102, and the terminal device 103.

It should be noted that the question-answering method in this embodiment of this application is usually performed by the terminal device or the server, and interaction with the user is implemented through the terminal device.

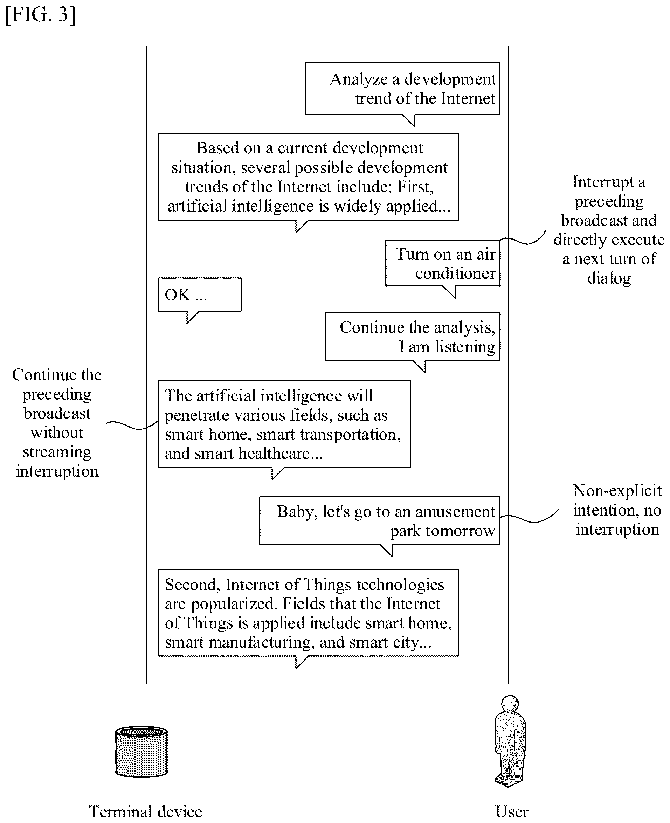

FIG. 3 is a diagram of an example scenario of a user and a terminal device in a question-answering method. As shown in FIG. 3, in this example, the user sends a first user instruction; a question-answering system generates first answer content according to the first user instruction; the user sends a second user instruction during broadcasting of the first answer content; the question-answering system interrupts the first answer content, and generates second answer content according to the second user instruction; the user sends a third user instruction, where the third user instruction instructs to continue broadcasting the first answer content; and the question-answering system recognizes the third user instruction and continues broadcasting unbroadcast content in the first answer content.

In this embodiment of this application, in the question-answering system, answer content is generated by using a large language model, and is broadcast by the terminal device. In other words, the large language model may be deployed on the terminal device, and optionally, the question-answering system is integrally deployed on the terminal device; or the large language model may be deployed on a cloud device, and after the cloud device generates answer content, the answer content is broadcast by the terminal device.

In this embodiment of this application, based on evolution of single-turn recording, processing-while-recording is supported, and adjacent turns of dialogs may be associated. In other words, a previous dialog turn may be interrupted in a manner of continuing sending an instruction, and non-adjacent dialog turns may be associated. Therefore, uninterrupted streaming and resumption of streaming broadcasting can be implemented in full-duplex.

Optionally, there is no limitation on one user instruction interaction between interrupting the first answer content and continuing the unbroadcast content. In other words, after the first answer content is interrupted, a plurality of user instruction interactions may be performed before the unbroadcast content is continued.

For example, as shown in FIG. 3, the first user instruction sent by the user may be "Analyze a development trend of the Internet". The first answer content generated by the question-answering system according to the first user instruction may be "Based on a current development situation, several possible development trends of the Internet include: First, artificial intelligence is widely applied", and streaming broadcasting starts.

For example, as shown in FIG. 3, the second user instruction sent by the user may be an instruction related to hardware such as "Turn on an air conditioner". The question-answering system interrupts the first answer content, recognizes, according to the second user instruction, an intention of turning on the air conditioner, performs the second answer content "OK", and sends a related instruction for turning on the air conditioner to a control system. Related operations of the control system are not described in this embodiment of this application. In addition, the second user instruction sent by the user may alternatively be a generation-type instruction such as "Analyze a development trend of the manufacturing industry". The question-answering system interrupts the first answer content, and generates, according to the second user instruction, the second answer content, for example, "The development trend of the manufacturing industry may be analyzed from the following aspects".

In this embodiment of this application, a specific implementation of the second user instruction for interrupting a current broadcast is not limited. For example, as shown in FIG. 1, the second user instruction sent by the user may be an instruction related to hardware such as "Turn on an air conditioner", or "Open a car window". The terminal device interrupts the first answer content, recognizes, according to the second user instruction, an intention of turning on the air conditioner, performs the second answer content "OK", and sends a related instruction for turning on the air conditioner to a control system. Related operations of the control system are not described in this embodiment of this application. The second user instruction sent by the user may alternatively be a generation-type instruction such as "Analyze a development trend of the manufacturing industry". The terminal device interrupts the first answer content, and broadcasts, according to the second user instruction, the second answer content, for example, "The development trend of the manufacturing industry may be analyzed from the following aspects".

For example, as shown in FIG. 3, after one or more dialogs, the user may send the third user instruction "Continue the analysis, I am listening", to instruct to continue the first answer content. In this embodiment of this application, related processing is performed on the interrupted first answer content. Therefore, when the user intends to resume the dialog such as "Continue the analysis", in this embodiment of this application, previously interrupted streaming broadcasting may be resumed to continue broadcasting the content that is not completely broadcast. For example, "The artificial intelligence will penetrate various fields, such as smart home, smart transportation, and smart healthcare."

In this embodiment of this application, a large language model is used as an example, and streaming broadcasting of the large language model may be interrupted at any time. In addition, the streaming broadcasting of the large language model can be interrupted only when a voice of the user explicitly indicates an intention to do so. A method for determining that the user has an explicit intention is not limited in this embodiment of this application. For example, a trustlist may be used for management. A user intention in the trustlist is an explicit intention, and a user intention not in the trustlist is a non-explicit intention. When an intention in the trustlist appears, in response to the user intention, the large language model may perform actions such as interrupting streaming broadcasting and starting a new dialog turn. After the streaming broadcasting of the large language model is interrupted, after a user intention to resume the broadcast is determined, the previous streaming broadcasting may be resumed from a breakpoint position at which the broadcast is interrupted.

For example, as shown in FIG. 3, the user utters a voice "Baby, let's go to an amusement park tomorrow". When it is determined that a user intention of the voice content is a non-explicit intention, the streaming broadcasting of the large language model is not interrupted.

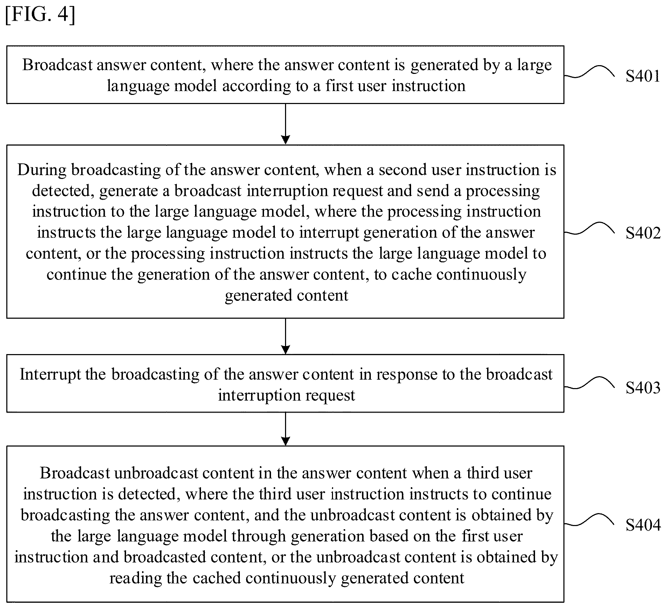

FIG. 4 is a schematic flowchart of a question-answering method. As shown in FIG. 4, an embodiment of this application provides a question-answering method. The method is applied to a terminal device. A large language model is deployed on the terminal device. The method mainly includes the following steps.

Step S401: Broadcast answer content, where the answer content is generated by the large language model according to a first user instruction.

In another possible implementation, in response to that a form of content input by a user is audio, the method further includes: performing voice analysis on the audio input by the user, to obtain the first user instruction and/or a second user instruction and/or a third user instruction. Alternatively, in response to that the form of the content input by the user is a text, the method further includes: processing, according to a preset processing rule, the text input by the user, to obtain the first user instruction and/or the second user instruction and/or the third user instruction.

Step S402: During broadcasting of the answer content, when the second user instruction is detected, generate a broadcast interruption request and send a processing instruction to the large language model, where the processing instruction instructs the large language model to interrupt generation of the answer content, or the processing instruction instructs the large language model to continue the generation of the answer content to cache continuously generated content.

In a possible implementation, in response to the second user instruction, after it is determined that a user intention corresponding to the second user instruction meets a preset condition, the broadcast interruption request is generated and the processing instruction is sent to the large language model.

In another possible implementation, the preset condition is a preset trustlist, and after it is determined that the user intention corresponding to the second user instruction is an intention in the preset trustlist, the broadcast interruption request is generated, and the processing instruction is sent to the large language model.

In another possible implementation, determining that the user intention corresponding to the second user instruction meets the preset condition includes: determining, according to the second user instruction by using a natural language understanding model, the user intention corresponding to the second user instruction; and determining whether the user intention meets the preset condition.

Step S403: Interrupt the broadcasting of the answer content in response to the broadcast interruption request.

Step S404: Broadcast unbroadcast content in the answer content when the third user instruction is detected, where the third user instruction instructs to continue broadcasting the answer content, and the unbroadcast content is obtained by the large language model through generation based on the first user instruction and broadcasted content, or the unbroadcast content is obtained by reading the cached continuously generated content.

In a possible implementation, when the unbroadcast content is obtained by the large language model through generation based on the first user instruction and the broadcasted content, the first user instruction and/or the broadcasted content are/is obtained through caching when the large language model interrupts the generation of the answer content.

In another possible implementation, when the unbroadcast content is obtained by the large language model through generation based on the first user instruction, a context of the first user instruction, and the broadcasted content, the context of the first user instruction is obtained through caching when the large language model interrupts the generation of the answer content.

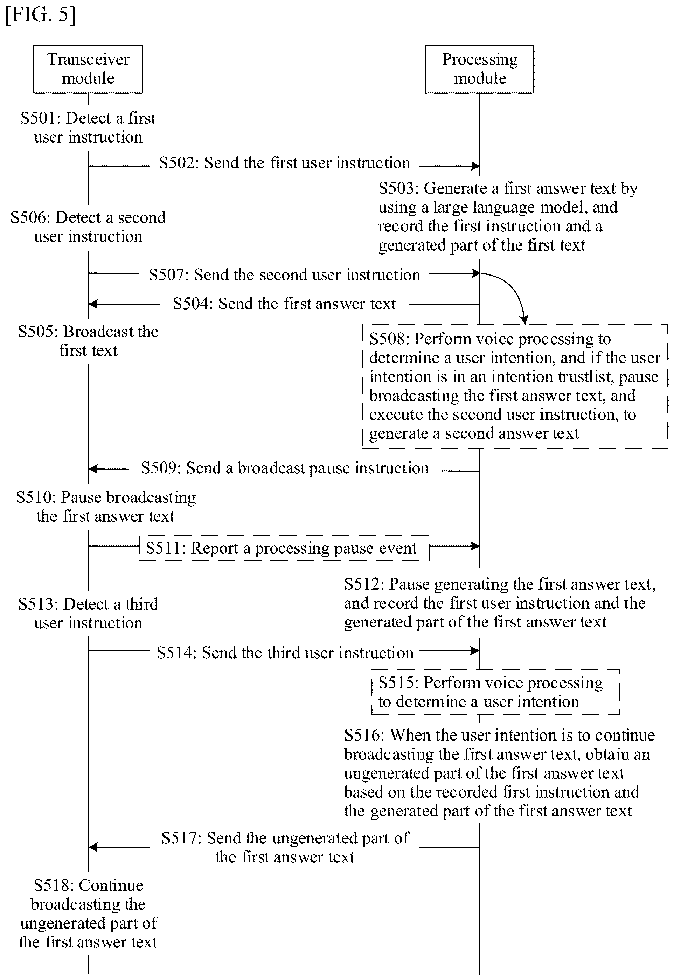

FIG. 5 to FIG. 7C show an example of a question-answering method. It should be noted that, for ease of describing the technical solutions in embodiments of this application, in embodiments of this application, one question of a user and one corresponding answer of a terminal device are defined as one turn. A focus of embodiments of this application is interruption and resumption of a broadcast. Therefore, a turn in which the user sends a broadcast generation instruction and the terminal device generates a corresponding broadcast is defined as a generation turn. A turn in which the user sends a broadcast resumption instruction and the terminal device resumes a broadcast instruction is defined as a resumption turn. One or more dialog turns therebetween are defined as an intermediate turn.

FIG. 5 is a schematic flowchart of a first example of a question-answering method. As shown in FIG. 5, it is assumed that some functional devices used for information detection and information broadcasting in the terminal device are transceiver modules, and some functional devices used for voice processing in the terminal device or a cloud device are processing modules. The first example of the question-answering method in this embodiment of this application mainly includes the following steps.

Step S501: The transceiver module detects a first user instruction. The first user instruction may be in an audio form such as a voice or a recording.

Step S502: The transceiver module sends the first user instruction to the processing module.

Step S503: The processing module performs voice processing, and generates first answer content by using a large language model. Optionally, the first user instruction and a generated part of the first answer content are recorded during generation of the first answer content.

Step S504: The processing module sends the first answer content to the transceiver module.

Step S505: The transceiver module broadcasts the first answer content.

In this embodiment of this application, step S501 to step S505 are also referred to as the generation turn. In the generation turn, the user generates the first user instruction, the transceiver module in the terminal device picks up the first user instruction of the user, and the processing module performs voice processing to generate the first answer content.

Step S506: The transceiver module detects a second user instruction. The second user instruction may be in an audio form such as a voice or a recording.

Step S507: The transceiver module sends the second user instruction to the processing module.

Optionally, in step S508, the processing module performs voice processing to determine a user intention, and if the user intention is in an intention trustlist, pauses broadcasting the first answer content, and executes the second user instruction, to generate second answer content.

In this embodiment of this application, there is also a step of determining the user intention in the generation turn and the resumption turn, to determine whether the user intention is an explicit intention in the trustlist. When it is determined that the user intention is an explicit intention, the transceiver module performs voice broadcasting or pauses broadcasting.

Step S509: The processing module sends a broadcast pause instruction to the transceiver module. Optionally, the processing module further sends the second answer content to the transceiver module.

Step S510: The transceiver module pauses broadcasting the first answer content. Optionally, the transceiver module broadcasts the second answer content.

Optionally, in step S511, a processing pause event is reported.

Step S512: Pause generating the first answer content. Optionally, the first user instruction and the generated part of the first answer content are recorded.

Optionally, recording the first user instruction may be recording all information or key information of the first user instruction. The key information may be related information that is used to generate the first answer content, for example, the "Internet" and "development trend" shown in FIG. 3. Recording the generated part of the first answer content may be recording text information or attribute information of the generated part of the first answer content. The text information refers to generated text content. The attribute information refers to information such as a position, an index, and a quantity of words of the generated part. For example, as shown in FIG. 3, the text information is "Based on a current development situation, several possible development trends of the Internet include: First, artificial intelligence is widely applied"; and the attribute information is: a pause position "...widely applied", a position of the first trend analysis, generated 36 words, and the like.

Optionally, based on a feature of generating-while-broadcasting of streaming broadcasting, steps of generating, sending, and broadcasting the first answer content (that is, steps S503 to S505) are performed simultaneously. Therefore, ungenerated content and unbroadcast content in the first answer content are the same. Further, generated content and broadcasted content in the first answer content are also the same. In addition, the first user instruction and the generated part of the first answer content may be recorded word by word during generation, sending, and broadcasting of the first answer content. Alternatively, the processing pause event may be reported, and the first user instruction and the generated part of the first answer content may be recorded.

Optionally, step S506 to step S512 are also referred to as the intermediate turn. In the intermediate turn, the user generates the second user instruction, the transceiver module in the terminal device picks up the second user instruction of the user, and the processing module performs voice processing and determines the user intention. When it is determined that the user intention is an explicit intention, the transceiver module performs voice broadcasting or pauses broadcasting.

Optionally, the intermediate turn is one or more dialog turns that interrupt the generation turn. FIG. 3 shows an application scenario in which the intermediate turn is one dialog turn. In another scenario, the intermediate turn is alternatively a plurality of dialog turns.

In this embodiment of this application, specific content of the intermediate turn is not limited either, may be an instruction "Turn on an air conditioner" shown in FIG. 3, or may be any other instruction.

Step S513: The transceiver module detects a third user instruction.

Step S514: The transceiver module sends the third user instruction.

Optionally, in step S515, the processing module continues to perform voice processing to determine a user intention. Determination of the user intention in step S515 is the same as that in step S508, except that a determining object and a determining result in step S515 are different. Details are not described herein again.

Step S516: When the user intention is to continue broadcasting the first answer content, the processing module obtains an ungenerated part of the first answer content based on the recorded first user instruction and the generated part of the first answer content.

For example, according to the recorded first user instruction, the processing module regenerates all content of the first answer content. Then, based on the generated part of the first answer content, the processing module may obtain the ungenerated part of the first answer content, that is, content that needs to be broadcast in the resumption turn.

Step S517: The processing module sends the ungenerated part of the first answer content to the transceiver module.

Step S518: The transceiver module continues broadcasting the ungenerated part of the first answer content.

In this embodiment of this application, step S513 to step S518 are also referred to as the resumption turn. In the resumption turn, the user generates the third user instruction, the transceiver module in the terminal device picks up the third user instruction of the user, and the processing module performs voice processing and determines the user intention. When it is determined that the user intention is to continue broadcasting the first answer content, the processing module obtains the ungenerated part of the first answer content based on the recorded first user instruction and the generated part of the first answer content, and the transceiver module broadcasts the ungenerated part of the first answer content. The user intention to continue broadcasting the first answer content is an explicit intention.

In this embodiment of this application, steps of the generation turn, the intermediate turn, and the resumption turn may be performed in a cross manner. For example, when the user starts to generate the second user instruction, step S506 and step S505 are performed simultaneously. That is, an operation of detecting the second user instruction and an operation of broadcasting the first answer content are performed simultaneously. In other words, the first answer content is broadcast while the second user instruction is detected, and broadcasting of the first answer content is paused only when the complete second user instruction is detected and it is determined that the user intention is an explicit intention.

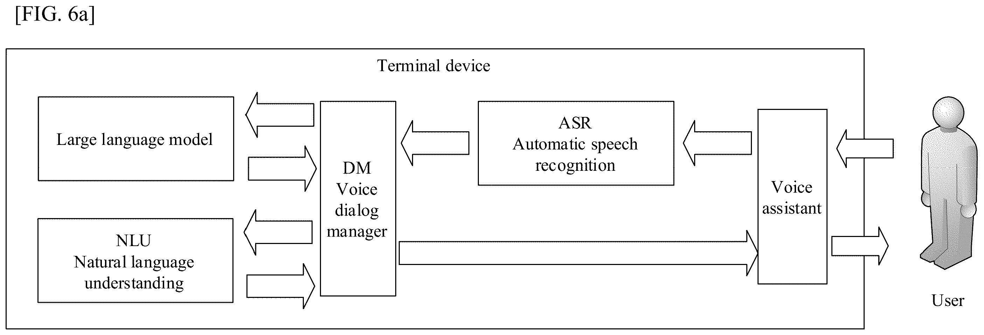

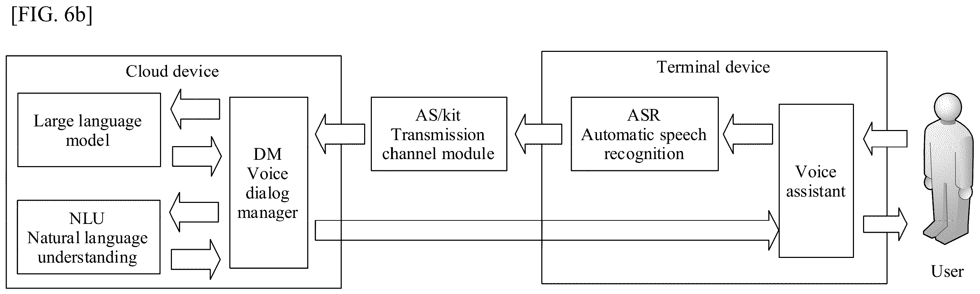

FIG. 6a and FIG. 6b are diagrams of a question-answering system.

As shown in FIG. 6a, in a specific implementation, both a transceiver module and a processing module are deployed on a terminal device. The transceiver module includes a voice assistant and an automatic speech recognition (Automatic Speech Recognition, ASR) module. The voice assistant has voice pickup and voice broadcast functions. The ASR module has a language processing function, and is configured to process a user voice, to obtain a user instruction. The processing module includes: a voice dialog manager (Dialog Manager, DM) module, a large language model, and a natural language understanding (Natural Language Understanding, NLU) module.

As shown in FIG. 6b, in another specific implementation, a transceiver module is deployed on a terminal device, and a processing module is deployed on a cloud device. Implementations of the transceiver module and the processing module are the same as those in FIG. 6a, and details are not described herein again. In addition, a transmission channel (Access Service/kit, AS/kit) module is further included between the transceiver module and the processing module. The AS/kit module is used in a channel for signal transmission between the terminal device and the cloud, and is applicable to a scenario in which a large language model is deployed on a server. The AS module refers to a cloud input service, and the kit module refers to a toolkit of the terminal device, to implement signal conversion and transmission between the cloud device and the terminal device.

For example, when a user speaks a wake-up word "Celia, Celia" to wake up the voice assistant, after the user speaks a voice instruction "Analyze a development trend of the Internet?" or "Turn on an air conditioner", the voice instruction passes through a process such as the ASR module, the AS/kit module, the DM module, the large language model, or the NLU module, and the voice assistant outputs answer content of the voice instruction. The DM module determines the voice instruction, and inputs different voice instructions into the large language model or the NLU module. The large language model is configured to generate answer content of a voice instruction, and the NLU module is configured to determine a user intention and the like. Optionally, to improve voice interaction efficiency, the voice instruction may be sent to both the large language model and the NLU module, and the large language model or the NLU module performs determining and analysis according to the voice instruction, to perform a next step.

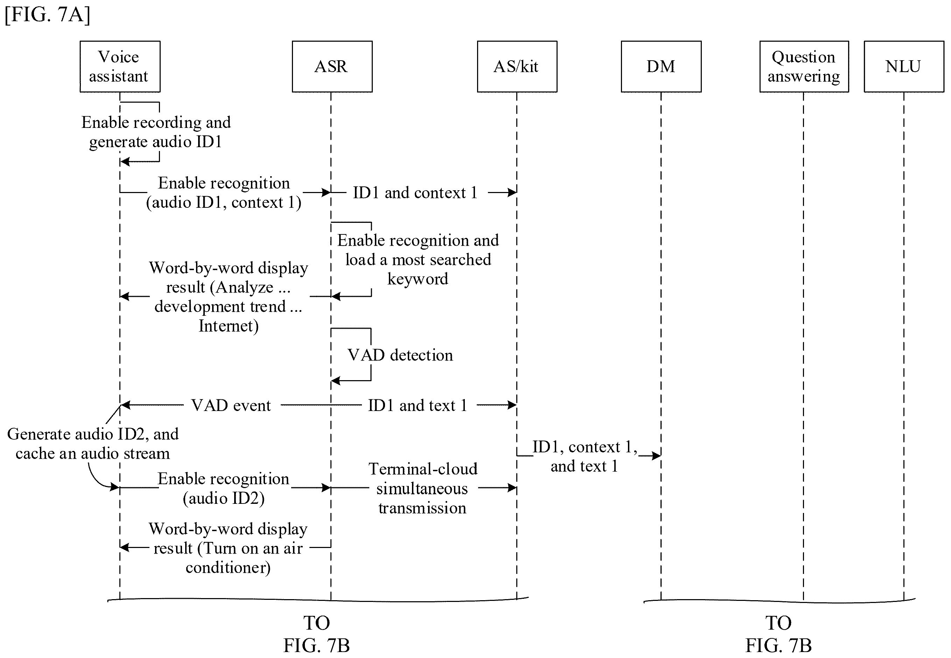

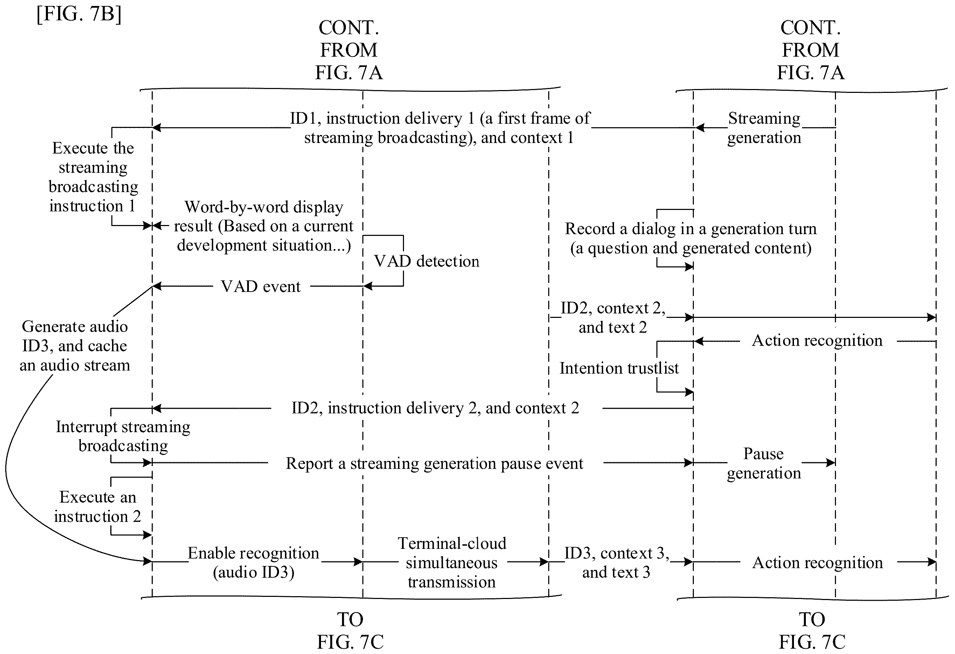

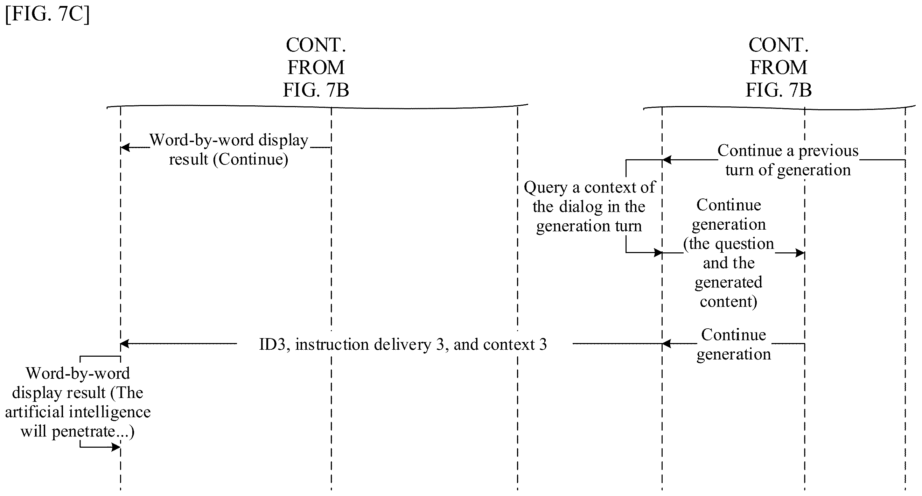

FIG. 7A to FIG. 7C are a schematic flowchart of a method of a first example of a question-answering system. As shown in FIG. 7A to FIG. 7C, a generation turn, an intermediate turn, and a resumption turn are mainly included. In the generation turn, a user question and generated content are recorded.

Optionally, in the intermediate turn, a user intention needs to be determined, to determine whether to interrupt broadcasting and whether to resume the broadcasting. A trustlist is used for management. When the user intention is in the trustlist, an instruction of the user intention is executed, and a pause event is reported to the cloud side, to pause generation of streaming broadcasting. In the resumption turn, based on the recorded user question and the generated content, the large language model is invoked to continuously generate subsequent continuous content. The large language model is capable of generating the continuous content based on the user question and the generated content. It may be further understood that the user intention may alternatively be determined in another dialog turn.

In this embodiment of this application, the DM module records a dialog in the generation turn, for example, the user question and the generated content, to perform broadcast resumption based on the recorded dialog in the resumption turn. For example, the user question may be "Analyze a development trend of the Internet", and the generated content may be "Based on a current development situation, several possible development trends of the Internet include: First, artificial intelligence is widely applied".

Optionally, the DM module further records a context of the generation turn, to implement broadcast resumption more accurately. For example, the context may be a dialog turn, whether a vehicle of the user is parked, a historical question of the user, a user profile, or the like. For example, after the user interrupts broadcasting, the user performs a plurality of dialogs. In this case, a context may have changed, for example, a historical question of the user has changed or a user profile have been updated. Therefore, when dialog resumption is performed in the resumption turn, unbroadcast content following a breakpoint may be generated based on broadcasted dialog content and the recorded context of the generation turn, so that the continuous unbroadcast content better meets an expectation of the user in the generation turn, and consistency of the answer content is ensured.

As shown in FIG. 7A to FIG. 7C, in the generation turn, the user starts a dialog by waking up the voice assistant. During a first dialog, the voice assistant may record a voice of the user, to obtain first audio and a corresponding first context, and send the first audio and the first context to the ASR module for voice recognition. The ASR module receives the first audio and the first context from the voice assistant, and performs voice recognition to obtain a corresponding first user instruction. The ASR module sends the first user instruction and the first context to the AS/kit module. The ASR module is further configured to perform voice activity detection (Voice Activity Detection, VAD), and send a first event text corresponding to a VAD event to the AS/kit module. The AS/kit module sends the first user instruction, the first event text, and the first context to the DM module. The DM module receives the first user instruction, the first event text, and the first context, and sends the first user instruction to the large language model. The large language model generates first answer content according to the first user instruction, and sends the first answer content to the DM module. Streaming generation is characterized by simultaneous generation and sending. The DM module sends the first answer content to the voice assistant by delivering the instruction. The voice assistant performs streaming broadcasting on the first answer content. The streaming broadcasting means that the large language model generates the first answer content while the voice assistant broadcasts the first answer content.

As shown in FIG. 7A to FIG. 7C, in the intermediate turn, there are two scenarios. In a first scenario, the user starts one or more dialogs after the first answer content is broadcast. The streaming broadcasting is not interrupted in this scenario, and details are not described in this embodiment of this application. In a second scenario, the user starts one or more dialogs before broadcasting of the first answer content is completed. In this case, the user needs to interrupt the broadcast of the first answer content to start a new dialog.

That is, in the intermediate turn, in a VAD event processing process, the voice assistant sends a voice of the VAD event to the ASR module. The ASR module performs voice recognition on the voice of the VAD event, and performs terminal-cloud simultaneous transmission on a recognized text, that is, sends the recognized text to the DM module through the AS/kit module, to interrupt streaming generation of the large language model. Optionally, the voice assistant simultaneously sends the recognized text for text display.

Optionally, in the intermediate turn, after the terminal-cloud simultaneous transmission, the AS/kit module sends the text of the VAD event to the DM module. The DM module sends the processed text of the VAD event to the NLU module. The NLU module determines a user intention based on the text of the VAD event and sends the user intention to the DM module. Based on a preset intention trustlist, the DM module determines whether the user intention of the VAD event is in the intention trustlist. When the user intention is in the intention trustlist, the DM module sends an instruction for interrupting the streaming broadcasting to the voice assistant. The voice assistant pauses broadcasting of the first answer content, and reports a streaming generation pause event to the DM module. The DM module controls the large language model to pause generation of the first answer content. In this case, the DM module records generated content in the first answer content.

As shown in FIG. 7A to FIG. 7C, in the resumption turn, the ASM module detects the VAD event, and a specific process is not described herein again. The NLU module determines the intention of the user voice of the VAD event. When it is determined that the intention of the user is to continue the interrupted broadcast content, based on the dialog in the generation turn, for example, the recorded user question and the generated content, the large language model is invoked to continuously generate subsequent continuous content. In other words, the large language model is capable of generating the continuous content based on the user question and the generated content.

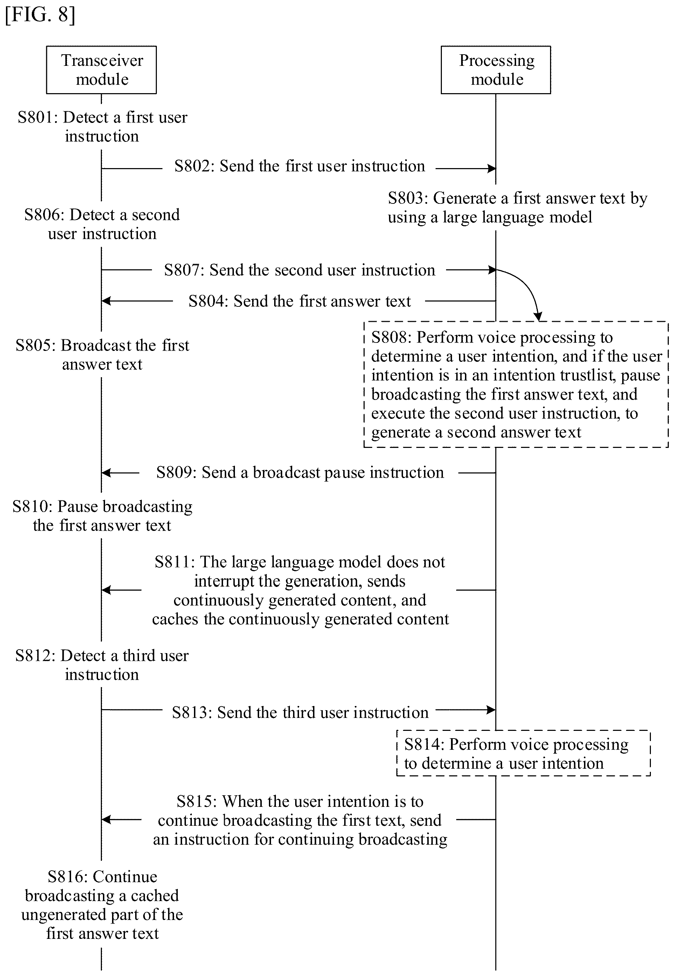

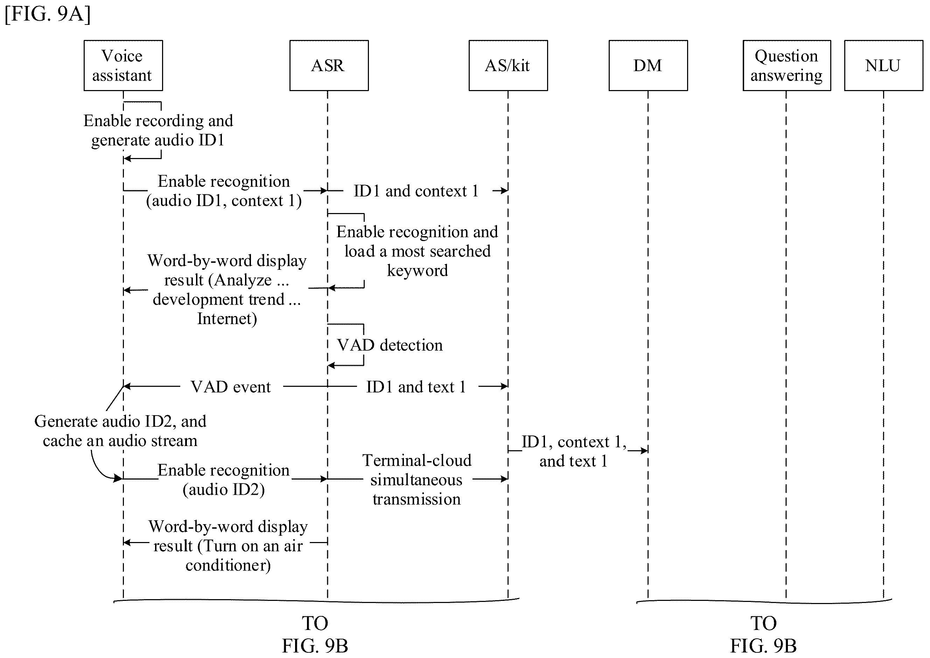

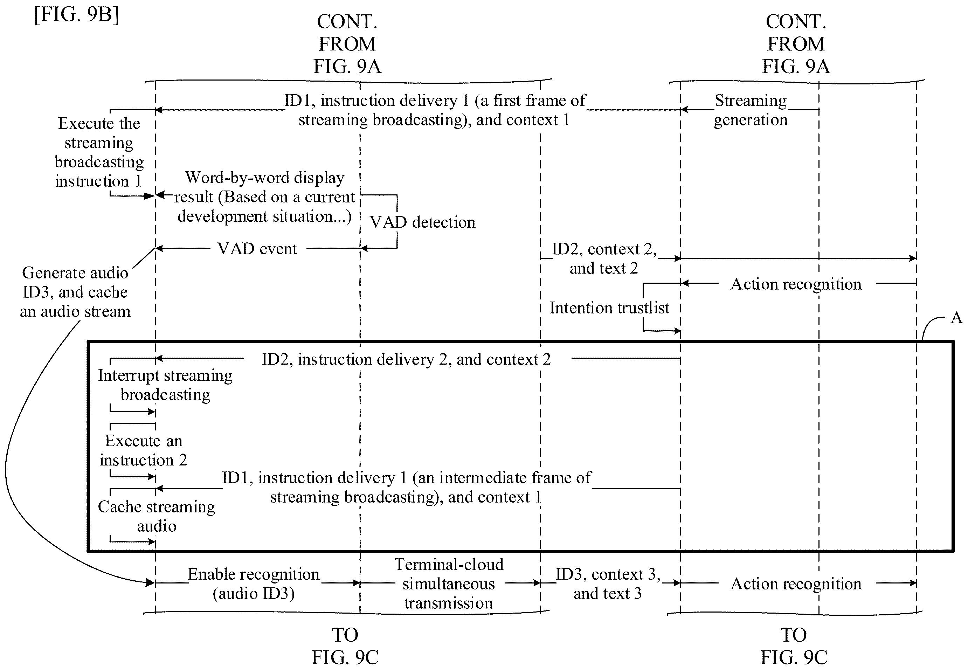

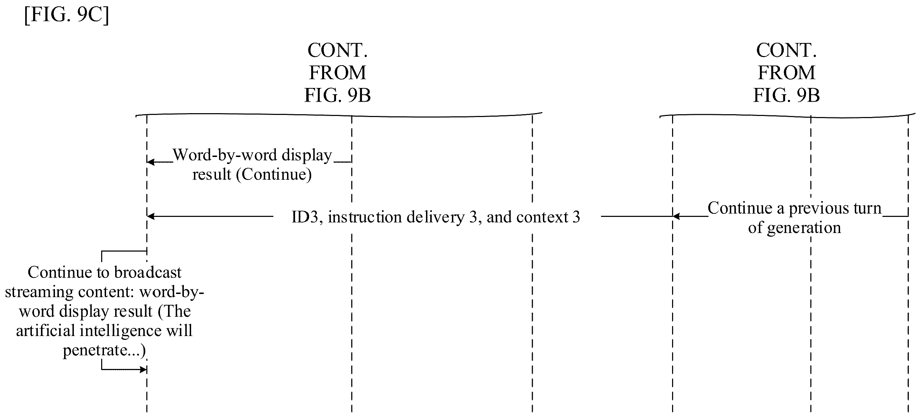

FIG. 8 and FIG. 9A to FIG. 9C show another example of a question-answering method. It should be noted that, the technical solutions of this example are implemented based on the question-answering system shown in FIG. 6a or FIG. 6b. An intermediate turn is the same as the examples in FIG. 5 to FIG. 7C, and parts of a generation turn and a resumption turn that are the same as those in the examples in FIG. 5 to FIG. 7C are not described again. That is, this example describes and explains only parts of the generation turn and the resumption turn that are different from the examples in FIG. 5 to FIG. 7C.

FIG. 8 is a schematic flowchart of a second example of a question-answering method. As shown in FIG. 8, compared with the first example, the processing module in this example does not record a first user instruction and generated part of first answer content, but continues to generate and cache unbroadcast content of the first answer content after broadcasting is paused. Optionally, the continuously generated unbroadcast content may be cached in the transceiver module, that is, the terminal side. When a user intention is determined to be continuing interrupted broadcast content, the cached content is broadcast. The second example of the question-answering method in this embodiment of this application mainly includes the following steps.

Step S801: The transceiver module detects the first user instruction. The first user instruction may be in an audio form such as a voice or a recording.

Step S802: The transceiver module sends the first user instruction to the processing module.

Step S803: The processing module generates the first answer content by using the large language model.

Step S804: The processing module sends the first answer content to the transceiver module.

Step S805: The transceiver module broadcasts the first answer content.

Step S806: The transceiver module detects a second user instruction. The second user instruction may be in an audio form such as a voice or a recording.

Step S807: The transceiver module sends the second user instruction to the processing module.

Optionally, in step S808, the processing module performs voice processing to determine a user intention, and if the user intention is in an intention trustlist, pauses broadcasting the first answer content, and executes the second user instruction, to generate second answer content.

Step S809: The processing module sends a broadcast pause instruction to the transceiver module. Optionally, the processing module further sends the second answer content to the transceiver module.

Step S810: The transceiver module pauses broadcasting the first answer content. Optionally, the transceiver module further broadcasts the second answer content.

Step S811: The large language model generates the first answer content without interruption, sends continuously generated content, and caches the continuously generated content. That is, step S803 continues to be performed, and generation of the first answer content is not interrupted, and the unbroadcast content of the first answer content is cached. A cache location is not limited in this embodiment of this application. For example, the unbroadcast content may be stored on the terminal side, so that the unbroadcast content is directly read from the terminal side when the unbroadcast content continues to be broadcast. This shortens a signal transmission path, improves operating efficiency of the terminal device, and improves user experience.

Step S812: The transceiver module detects a third user instruction.

Step S813: The transceiver module sends the third user instruction.

Optionally, in step S814, the processing module continues to perform voice processing, and determines a user intention.

Step S815: When the user intention is to continue broadcasting the first answer content, the processing module obtains the unbroadcast content of the first answer content cached on the terminal side, and sends an instruction for continuing broadcasting the first answer content to the transceiver module.

Step S816: The transceiver module continues broadcasting the unbroadcast content of the first answer content.

That is, in a generation turn, a context, a question, and generated content in this turn are no longer separately cached. Instead, when the broadcast is interrupted, the remaining content that needs to be broadcast is continuously generated in the generation turn, and the remaining content is cached. Therefore, when the third user instruction in a resumption turn is sent, the terminal side directly broadcasts the cached remaining content.

FIG. 9A to FIG. 9C are a schematic flowchart of a method of a second example of a question-answering system. As shown in FIG. 9A to FIG. 9C, steps in a block line corresponding to an identifier A indicate a main difference between this example and the first example. The processing module does not interrupt generation of the first content by the large language model, but obtains and caches unbroadcast content after the first content is completely generated. A cache location is not limited in this embodiment of this application. For example, the unbroadcast content is sent to the terminal device, and the terminal device caches the unbroadcast content. In a resumption turn, when the user sends a user instruction that instructs to resume interrupted broadcast content, the unbroadcast content cached by the terminal device is read for broadcasting.

Based on a same concept as the foregoing embodiment, an embodiment of this application further provides another question-answering method.

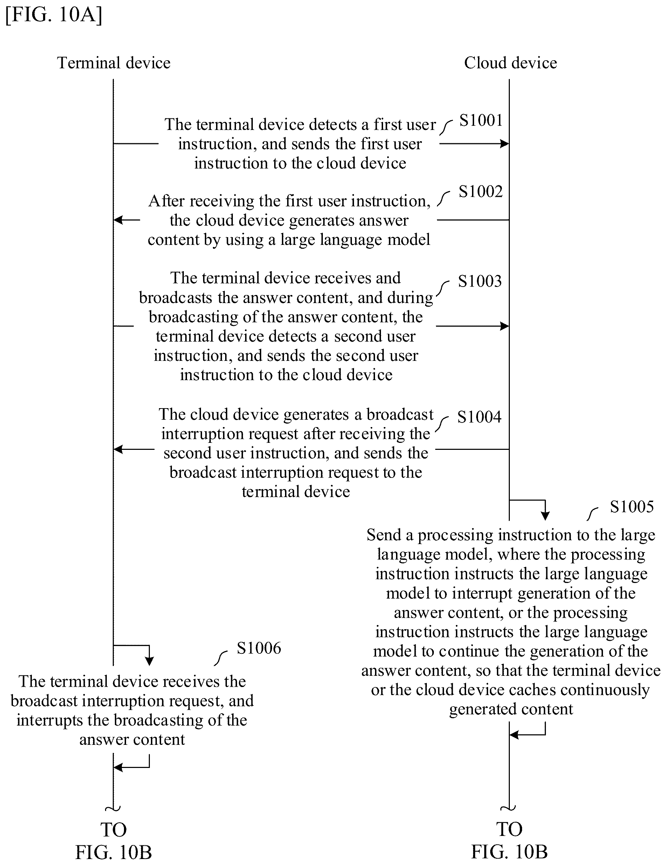

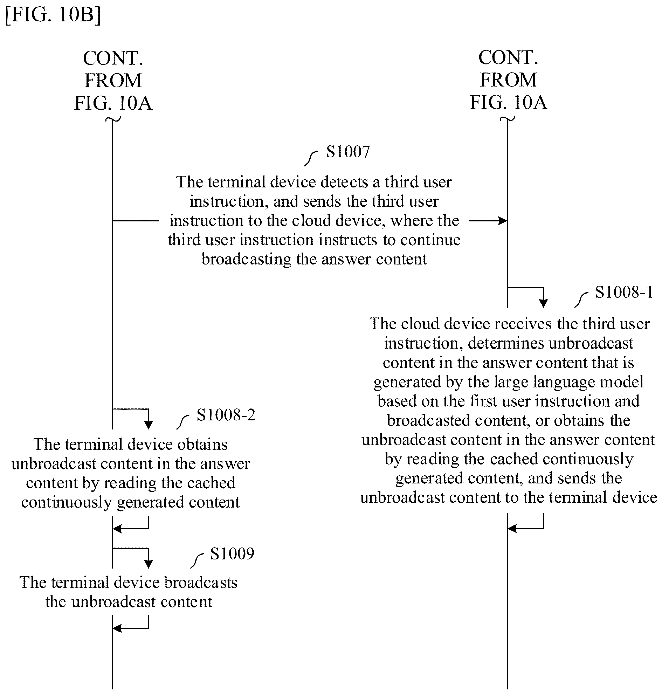

Refer to FIG. 10A and FIG. 10B. This application provides another question-answering method, applied to a question-answering system. The question-answering system includes a terminal device and a cloud device. The terminal device is communicatively connected to the cloud device, and a large language model is deployed on the cloud device. The method mainly includes the following steps.

Step S1001: The terminal device detects a first user instruction, and sends the first user instruction to the cloud device.

In a possible implementation, in response to that a form of content input by a user is audio, the method further includes: The terminal device performs voice analysis on the audio input by the user, to obtain the first user instruction and/or a second user instruction and/or a third user instruction. Alternatively, in response to that a form of content input by the user is a text, the method further includes: According to a preset processing rule, the terminal device processes the text input by the user, to obtain the first user instruction and/or the second user instruction and/or the third user instruction.

Step S1002: After receiving the first user instruction, the cloud device generates answer content by using the large language model.

Step S1003: The terminal device receives and broadcasts the answer content, and during broadcasting of the answer content, the terminal device detects the second user instruction, and sends the second user instruction to the cloud device.

Step S1004: The cloud device generates a broadcast interruption request after receiving the second user instruction, and sends the broadcast interruption request to the terminal device.

In a possible implementation, that the cloud device generates the broadcast interruption request after receiving the second user instruction includes: The cloud device receives the second user instruction, and generates the broadcast interruption request after determining that a user intention corresponding to the second user instruction meets a preset condition.

In another possible implementation, the preset condition is a preset trustlist. Determining that the user intention corresponding to the second user instruction meets the preset condition includes: determining that the user intention corresponding to the second user instruction is an intention in the preset trustlist.

In another possible implementation, determining that the user intention corresponding to the second user instruction meets the preset condition includes: determining, according to the second user instruction by using a natural language understanding model, the user intention corresponding to the second user instruction; and determining whether the user intention meets the preset condition.

Step S1005: Send a processing instruction to the large language model, where the processing instruction instructs the large language model to interrupt generation of the answer content, or the processing instruction instructs the large language model to continue the generation of the answer content, so that the terminal device or the cloud device caches continuously generated content.

Step S1006: The terminal device receives the broadcast interruption request, and interrupts the broadcasting of the answer content.

Step S1007: The terminal device detects the third user instruction, and sends the third user instruction to the cloud device, where the third user instruction instructs to continue broadcasting the answer content.

Step S1008-1: The cloud device receives the third user instruction, determines unbroadcast content in the answer content that is generated by the large language model based on the first user instruction and broadcasted content, or obtains the unbroadcast content in the answer content by reading the cached continuously generated content, and sends the unbroadcast content to the terminal device.

Step S1008-2: The terminal device obtains unbroadcast content in the answer content by reading the cached continuously generated content.

Steps S1008-1 and S1008-2 provide two methods for determining the unbroadcast content. That is, when the third user instruction instructing to continue broadcasting the answer content is detected, step S1008-1 or step S1008-2 is performed, and the unbroadcast content may be determined.

Step S1009: The terminal device broadcasts the unbroadcast content.

In a possible implementation, the method further includes: When the large language model interrupts generation of the answer content, the terminal device or the cloud device caches the first user instruction and/or the broadcasted content, so that the large language model obtains the unbroadcast content through generation based on the first user instruction and the broadcasted content.

In another possible implementation, the method further includes: When the large language model interrupts generation of the answer content, the terminal device or the cloud device caches a context of the first user instruction, so that the large language model obtains the unbroadcast content through generation based on the first user instruction, the context of the first user instruction, and the broadcasted content.

Based on a same concept as the foregoing embodiment, this application further provides a question-answering method, applied to a cloud device. A large language model is deployed on the cloud device. The question-answering method includes: generating, according to a first user instruction of a user, corresponding answer content by using the large language model, where the generated answer content may be broadcast to the user; during broadcasting of the answer content, when a second user instruction is received, generating a broadcast interruption request to indicate interruption of the broadcast of the answer content, and further sending a processing instruction to the large language model, so that the large language model interrupts or continues generation of the answer content, where when the large language model continues the generation of the answer content, continuously generated content is cached, and the broadcast interruption request is configured to interrupt the broadcasting of the answer content; and receiving a third user instruction, and when a user intention indicated by the third user instruction is to continue broadcasting the answer content, determining unbroadcast content in the answer content that is generated by the large language model based on the first user instruction and broadcasted content, or obtaining the unbroadcast content by reading the cached continuously generated content, so that the unbroadcast content is broadcast. Therefore, a purpose of interrupting and continuing a broadcast process of the answer content is achieved.

In another possible implementation, the method further includes: when the large language model interrupts the generation of the answer content, caching the first user instruction and/or the broadcasted content. Therefore, the large language model may obtain the unbroadcast content through generation based on the cached first user instruction and the broadcasted content.

In another possible implementation, the method further includes: when the large language model interrupts the generation of the answer content, caching a context of the first user instruction. Therefore, the large language model may obtain the unbroadcast content through generation based on the first user instruction, the context of the first user instruction, and the broadcasted content.

In another possible implementation, a user instruction for interrupting broadcasting is limited. Further, a user intention corresponding to the second user instruction is determined, and the broadcast interruption request is generated only after the user intention meets a preset condition.

In another possible implementation, the preset condition is implemented by a preset trustlist, to determine the user intention corresponding to the second user instruction. When the user intention is an intention in the preset trustlist, the broadcast of the answer content is interrupted.

In another possible implementation, the user intention corresponding to the second user instruction is obtained through analysis by using a natural language understanding model.

In another possible implementation, when a form of content input by the user is audio, voice analysis is performed on the audio input by the user, to obtain the corresponding first user instruction and/or second user instruction and/or third user instruction. When the form of the content input by the user is a text, text processing is performed according to a preset processing rule to obtain the corresponding first user instruction and/or second user instruction and/or third user instruction.

Based on a same concept as the foregoing embodiment, this application further provides a question-answering method, applied to a terminal device. The question-answering method includes: The terminal device detects a first user instruction, and sends the first user instruction to a cloud device, where the first user instruction instructs the cloud device to generate answer content based on a large language model; the terminal device receives and broadcasts the answer content sent by the cloud device, and during broadcasting of the answer content, the terminal device detects a second user instruction that instructs the cloud device to generate a broadcast interruption request, and sends the second user instruction to the cloud device; then the terminal device receives the broadcast interruption request sent by the cloud device, and interrupts the broadcasting of the answer content; the terminal device detects a third user instruction, and sends the third user instruction to the cloud device, where the third user instruction instructs to continue broadcasting unbroadcast content in the answer content; and finally, the terminal device receives the unbroadcast content in the answer content sent by the cloud device, and broadcasts the unbroadcast content.

In another possible implementation, when a form of content input by a user is audio, voice analysis is performed on the audio input by the user, to obtain the corresponding first user instruction and/or second user instruction and/or third user instruction. When the form of the content input by the user is a text, text processing is performed according to a preset processing rule to obtain the corresponding first user instruction and/or second user instruction and/or third user instruction.

Based on a same concept as the foregoing embodiment, this application provides a terminal device, and the terminal device is configured to perform the method provided in embodiments of this application.

Based on a same concept as the foregoing embodiment, this application provides a cloud device. A large language model is deployed on the cloud device, the cloud device is communicatively connected to a terminal device, and the cloud device is configured to perform the method provided in embodiments of this application.

Based on a same concept as the foregoing embodiment, this application provides a question-answering system. The question-answering system includes a terminal device and a cloud device. The terminal device is communicatively connected to the cloud device. A large language model is deployed on the cloud device. The terminal device is configured to perform the method provided in embodiments of this application, and/or the cloud device is configured to perform the method provided in embodiments of this application, and/or the question-answering system is configured to perform the method provided in embodiments of this application.

Based on a same concept as the foregoing embodiments, this application provides a chip. The chip includes a processing circuit and a storage medium. The storage medium stores computer program code. When the computer program code is executed by the processing circuit, the method provided in embodiments of this application is implemented. Based on a same concept as the foregoing embodiment, this application provides a computer-readable storage medium, and the computer-readable storage medium stores a computer program. When the computer program is executed by a processor, the method provided in embodiments of this application is implemented.

Based on a same concept as the foregoing embodiments, this application provides a computer program product, including program instructions. When the program instructions are executed by a computer, the computer is enabled to perform the method provided in embodiments of this application.

A person of ordinary skill in the art may be further aware that, units and algorithm steps of the examples described in combination with embodiments disclosed in this specification can be implemented by electronic hardware, computer software, or a combination thereof. To clearly describe interchangeability between the hardware and the software, compositions and steps of each example have been generally described in the foregoing descriptions based on functions. Whether these functions are performed by hardware or software depends on a particular application and a design constraint condition of the technical solutions. A person of ordinary skill in the art may use different methods to implement the described functions for each particular application, but it should not be considered that the implementation goes beyond the scope of this application.

The steps of the methods or algorithms described in embodiments disclosed in this specification may be implemented by hardware and a software module executed by a processor or a combination of hardware and a software module executed by the processor. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

In the foregoing specific implementations, the objective, technical solutions, and beneficial effects of this application are further described in detail. It should be understood that the foregoing descriptions are merely specific implementations of this application, but are not intended to limit the protection scope of this application. Any modification, equivalent replacement, or improvement made without departing from the spirit and principle of this application should fall within the protection scope of this application.

## Claims

1. A question-answering method, applied to a terminal device, wherein a large language model is deployed on the terminal device, and the method comprises:
broadcasting answer content, wherein the answer content is generated by the large language model according to a first user instruction;
during broadcasting of the answer content, when a second user instruction is detected, generating a broadcast interruption request and sending a processing instruction to the large language model, wherein the processing instruction instructs the large language model to interrupt generation of the answer content, or the processing instruction instructs the large language model to continue the generation of the answer content to cache continuously generated content;
interrupting the broadcasting of the answer content in response to the broadcast interruption request; and
broadcasting unbroadcast content in the answer content when a third user instruction is detected, wherein the third user instruction instructs to continue broadcasting the answer content, and the unbroadcast content is obtained by the large language model through generation based on the first user instruction and broadcasted content, or the unbroadcast content is obtained by reading the cached continuously generated content.

2. The method according to claim 1, wherein when the unbroadcast content is obtained by the large language model through generation based on the first user instruction and the broadcasted content, the first user instruction and/or the broadcasted content are/is obtained through caching when the large language model interrupts the generation of the answer content.

3. The method according to claim 1 or 2, wherein when the unbroadcast content is obtained by the large language model through generation based on the first user instruction, a context of the first user instruction, and the broadcasted content, the context of the first user instruction is obtained through caching when the large language model interrupts the generation of the answer content.

4. The method according to any one of claims 1 to 3, wherein when the second user instruction is detected, generating the broadcast interruption request and sending the processing instruction to the large language model comprises:
when the second user instruction is detected, in response to the second user instruction, after determining that a user intention corresponding to the second user instruction meets a preset condition, generating the broadcast interruption request and sending the processing instruction to the large language model.

5. The method according to claim 4, wherein the preset condition is a preset trustlist, and after it is determined that the user intention corresponding to the second user instruction is an intention in the preset trustlist, the broadcast interruption request is generated, and the processing instruction is sent to the large language model.

6. The method according to claim 4 or 5, wherein determining that the user intention corresponding to the second user instruction meets the preset condition comprises:
determining, according to the second user instruction by using a natural language understanding model, the user intention corresponding to the second user instruction; and
determining whether the user intention meets the preset condition.

7. The method according to any one of claims 1 to 6, wherein the first user instruction and/or the second user instruction and/or the third user instruction are/is obtained by performing voice analysis on audio input by a user, or is obtained by processing, according to a preset processing rule, a text input by the user.

8. A question-answering method, applied to a question-answering system, wherein the question-answering system comprises a terminal device and a cloud device, the terminal device is communicatively connected to the cloud device, a large language model is deployed on the cloud device, and the method comprises:
sending, by the terminal device, a first user instruction to the cloud device when the first user instruction is detected;
generating, by the cloud device, answer content by using the large language model after receiving the first user instruction;
receiving and broadcasting, by the terminal device, the answer content, and during broadcasting of the answer content, sending, by the terminal device, a second user instruction to the cloud device when the second user instruction is detected;
generating, by the cloud device, a broadcast interruption request after receiving the second user instruction, sending the broadcast interruption request to the terminal device, and sending a processing instruction to the large language model, wherein the processing instruction instructs the large language model to interrupt generation of the answer content, or the processing instruction instructs the large language model to continue the generation of the answer content, so that the cloud device or the terminal device caches continuously generated content;
receiving, by the terminal device, the broadcast interruption request, and interrupting the broadcasting of the answer content;
sending, by the terminal device, a third user instruction to the cloud device when the third user instruction is detected, wherein the third user instruction instructs to continue broadcasting the answer content;
receiving, by the cloud device, the third user instruction, determining unbroadcast content in the answer content that is generated by the large language model based on the first user instruction and broadcasted content, and sending the unbroadcast content to the terminal device; or obtaining, by the cloud device or the terminal device, the unbroadcast content in the answer content by reading the cached continuously generated content; and
broadcasting, by the terminal device, the unbroadcast content.

9. The method according to claim 8, further comprising:
caching, by the cloud device or the terminal device, the first user instruction and/or the broadcasted content when the large language model interrupts the generation of the answer content, so that the large language model obtains the unbroadcast content through generation based on the first user instruction and the broadcasted content.

10. The method according to claim 8 or 9, further comprising:
caching, by the cloud device or the terminal device, a context of the first user instruction when the large language model interrupts the generation of the answer content, so that the large language model obtains the unbroadcast content through generation based on the first user instruction, the context of the first user instruction, and the broadcasted content.

11. The method according to any one of claims 8 to 10, wherein generating, by the cloud device, the broadcast interruption request after receiving the second user instruction comprises:
receiving, by the cloud device, the second user instruction, and generating the broadcast interruption request after determining that a user intention corresponding to the second user instruction meets a preset condition.

12. The method according to claim 11, wherein the preset condition is a preset trustlist, and determining that the user intention corresponding to the second user instruction meets the preset condition comprises:
determining that the user intention corresponding to the second user instruction is an intention in the preset trustlist.

13. The method according to claim 11 or 12, wherein determining that the user intention corresponding to the second user instruction meets the preset condition comprises:
determining, according to the second user instruction by using a natural language understanding model, the user intention corresponding to the second user instruction; and
determining whether the user intention meets the preset condition.

14. The method according to any one of claims 8 to 13, wherein the first user instruction and/or the second user instruction and/or the third user instruction are/is obtained by performing voice analysis on audio input by a user, or is obtained by processing, according to a preset processing rule, a text input by the user.

15. A question-answering method, applied to a cloud device, wherein a large language model is deployed on the cloud device, and the method comprises:
in response to a first user instruction, generating answer content by using the large language model;
during broadcasting of the answer content, generating a broadcast interruption request in response to a second user instruction, and sending a processing instruction to the large language model, wherein the processing instruction instructs the large language model to interrupt generation of the answer content, or the processing instruction instructs the large language model to continue the generation of the answer content, so that continuously generated content is cached, and the broadcast interruption request is configured to interrupt the broadcasting of the answer content; and
in response to a third user instruction, determining unbroadcast content in the answer content that is generated by the large language model based on the first user instruction and broadcasted content, or obtaining the unbroadcast content in the answer content by reading the cached continuously generated content, so that the unbroadcast content is broadcast, wherein the third user instruction instructs to continue broadcasting the answer content.

16. The method according to claim 15, further comprising:
caching the first user instruction and/or the broadcasted content when the large language model interrupts the generation of the answer content, so that the large language model obtains the unbroadcast content through generation based on the first user instruction and the broadcasted content.

17. The method according to claim 15 or 16, further comprising:
caching a context of the first user instruction when the large language model interrupts the generation of the answer content, so that the large language model obtains the unbroadcast content through generation based on the first user instruction, the context of the first user instruction, and the broadcasted content.

18. The method according to any one of claims 15 to 17, wherein generating the broadcast interruption request in response to the second user instruction comprises:
in response to the second user instruction, and generating the broadcast interruption request after determining that a user intention corresponding to the second user instruction meets a preset condition.

19. The method according to claim 18, wherein the preset condition is a preset trustlist, and determining that the user intention corresponding to the second user instruction meets the preset condition comprises:
determining that the user intention corresponding to the second user instruction is an intention in the preset trustlist.

20. The method according to claim 18 or 19, wherein determining that the user intention corresponding to the second user instruction meets the preset condition comprises:
determining, according to the second user instruction by using a natural language understanding model, the user intention corresponding to the second user instruction; and
determining whether the user intention meets the preset condition.

21. The method according to any one of claims 15 to 20, wherein the first user instruction and/or the second user instruction and/or the third user instruction are/is obtained by performing voice analysis on audio input by a user, or is obtained by processing, according to a preset processing rule, a text input by the user.

22. A question-answering method, applied to a terminal device, wherein the method comprises:
sending, by the terminal device, a first user instruction to a cloud device when the first user instruction is detected, wherein the first user instruction instructs the cloud device to generate answer content based on a large language model;
receiving and broadcasting, by the terminal device, the answer content sent by the cloud device, and during broadcasting of the answer content, sending, by the terminal device, a second user instruction to the cloud device when the second user instruction is detected, wherein the second user instruction instructs the cloud device to generate a broadcast interruption request;
receiving, by the terminal device, the broadcast interruption request sent by the cloud device, and interrupting the broadcasting of the answer content;
sending, by the terminal device, a third user instruction to the cloud device when the third user instruction is detected, wherein the third user instruction instructs to continue broadcasting unbroadcast content in the answer content; and
receiving, by the terminal device, the unbroadcast content in the answer content sent by the cloud device, and broadcasting the unbroadcast content.

23. The method according to claim 22, wherein the first user instruction and/or the second user instruction and/or the third user instruction are/is obtained by performing voice analysis on audio input by a user, or is obtained by processing, according to a preset processing rule, a text input by the user.

24. A terminal device, wherein the terminal device is configured to perform the method according to any one of claims 1 to 7, or perform the method according to any one of claims 22 to 23.

25. A question-answering system, wherein the question-answering system comprises a terminal device and a cloud device, the terminal device is communicatively connected to the cloud device, a large language model is deployed on the cloud device, the terminal device is configured to perform the method according to any one of claims 22 to 23, and/or the cloud device is configured to perform the method according to any one of claims 15 to 21, and/or the question-answering system is configured to perform the method according to any one of claims 8 to 14.

26. A cloud device, wherein a large language model is deployed on the cloud device, the cloud device is communicatively connected to a terminal device, and the cloud device is configured to perform the method according to any one of claims 15 to 21.

27. A computer-readable storage medium, wherein the computer-readable storage medium stores a computer program, and when the computer program is executed by a processor, the method according to any one of claims 1 to 23 is implemented.

28. A chip, wherein the chip comprises a processing circuit and a storage medium, the storage medium stores computer program code, and when the computer program code is executed by the processing circuit, the method according to any one of claims 1 to 23 is implemented.

29. A computer program product, wherein the computer program product comprises program instructions, and when the program instructions are executed by a computer, the computer is enabled to perform the method according to any one of claims 1 to 23.
